# EUROPÄISCHE PATENTSCHRIFT

(11) **EP 4 038 443 B1**
(45) Veröffentlichungstag und Bekanntmachung des Hinweises auf die Patenterteilung: **20.12.2023**
(21) Anmeldenummer: 20788704.3
(22) Anmeldetag: 28.09.2020
(51) Int. Cl.: G02C 1/06, G02C 1/08, G02C 1/00

(54) **BRILLE MIT AUSTAUSCHBAREN BRILLENGLÄSERN UND BRILLENSET**
SPECTACLES WITH EXCHANGEABLE SPECTACLE LENSES, AND SPECTACLE SET
LUNETTES À VERRES DE LUNETTES INTERCHANGEABLES ET ENSEMBLE DE LUNETTES

(30) Priorität: 30.09.2019 DE 102019126297
(43) Veröffentlichungstag der Anmeldung: 10.08.2022
(73) Patentinhaber: Simon, Djamel, 99518 Bad Sulza (OT Eckolstädt) (DE)
(72) Erfinder: Simon, Djamel, 99518 Bad Sulza (OT Eckolstädt) (DE)
(74) Vertreter: Gleim Petri Patent- und Rechtsanwaltspartnerschaft mbB
(86) Internationale Anmeldenummer: PCT/DE2020/100828
(87) Internationale Veröffentlichungsnummer: WO 2021/063442

(56) Entgegenhaltungen:
- DE-U1-202016 102 990
- KR-A- 20110 035 498
- KR-A- 20150 127 435
- US-A- 4 971 431
- US-A- 6 074 059
- US-A1- 2016 202 496

## Beschreibung

Schon lange ist eine Brille nicht mehr nur ein Hilfsmittel zur Verbesserung der Sehqualität, sondern dient auch oder sogar nur als modisches Zubehör. Zunehmend ist es den Brillenträgern wichtig, dass die Brille nicht nur zu ihrer Persönlichkeit passt, sondern auch zur jeweils getragenen Bekleidung. So geht der Trend dahin, mehrere Brillen zu besitzen, die nicht für unterschiedliche Anwendungen, z. B. als Lesebrille oder Fernbrille, sondern in Kombination insbesondere mit unterschiedlich farbiger Bekleidung getragen werden. Insbesondere, wenn die Brillengläser individuell für den Brillenträger angefertigt werden müssen, ist es jedoch ein sehr teures Vergnügen, sich mehrere Brillen anfertigen zu lassen.

Auf dem Markt haben sich daher Brillensets durchgesetzt, bestehend aus einer Brille mit mehreren, durch den Brillenträger selbst austauschbaren Bügelpaaren. Durch den Austausch der Bügel vermittelt die Brille jeweils im begrenzten Maße einen unterschiedlichen Gesamteindruck. Die Frontansicht der Brille (Brillenrahmen) bleibt jedoch unverändert.

Sets, bestehend aus einem Paar Brillengläser und mehreren austauschbaren Brillengestellen sind am Markt noch nicht gängig. Hauptsächlich wird das daran liegen, dass die Brillengläser in einer definierten Lage in dem Brillenrahmen eingesetzt werden müssen und auch bei einem häufigen Austausch keine Schäden nehmen dürfen.

Aus der DE 20 2016 102 990 U1 ist ein Brillenrahmen bekannt, bei dem die Brillengläser, ohne die Verwendung von Werkzeug, austauschbar sind. Die Brillengläser sind jeweils in einem zusätzlichen Brillenglasrahmen gefasst, der passgenau in den Öffnungen des Brillenrahmens aufgenommen werden kann. Die Öffnungen des Brillenrahmens und die Brillengläser sind kreisrund ausgebildet. Die Lagesicherung und Befestigung erfolgt durch mindestens eine Rastnase am Au ßenumfang der Brillenglasrahmen, die an entsprechender Stelle in Aussparungen des Brillenrahmens eingesetzt werden und die durch Drehen des Brillenglases um die optische Achse in einer sich an die Aussparung anschließenden Nut des Brillenrahmens hintergreift. Das gezeigte Prinzip funktioniert ausschließlich für kreisrunde Brillengläser. Es gibt keine eindeutige Zuordnung der Brillengläser zur jeweiligen Öffnung des Brillenrahmens und keine eindeutige Ausrichtung der Brillengläser um die optische Achse.

Ein in der DE 20 2015 103 139 U1 offenbartes Brillengestell mit wechselbaren Brillengläsern weist einen Schnellbefestigungsmechanismus zum lösbaren Halten der Brillengläser auf. Die Brillengläser sind jeweils in einem zusätzlichen Brillenglasrahmen gefasst. Die Brillenglasrahmen weisen jeweils zu einer Seite einen zylindrischen Ansatz und zur in etwa gegenüberliegenden Seite eine hohlzylindrische Vertiefung auf. Der zylindrische Ansatz wird beim Einsetzen des Brillenglases in einer korrespondierenden Ausnehmung an der Bügelseite des Brillengestells geführt. In die hohlzylindrische Vertiefung greift ein Riegel ein, der im rohrförmigen Mittelsteg des Brillengestells geführt und entgegen einer Federkraft beweglich ist. Das Brillenglas wird beim Anbringen am Brillenrahmen zur Anlage gebracht und durch den Riegel gegen das Herabfallen gesichert. In der WO 2015/031511 A1 wird von einem Stand der Technik für Brillenkonfigurationen ausgegangen, in denen die Brillengläser herausnehmbar sind und durch Schrauben oder andere lösbare mittelbare Verbindungen im Brillenrahmen gesichert werden. Man kann davon ausgehen, dass für eine solche Brillenkonfiguration weder ein häufiger Austausch der Brillengläser angedacht ist, noch dass dieser Austausch durch den Brillenträger selbst anstatt durch einen fachkundigen Optiker erfolgen kann.

Andere Brillenkonfigurationen mit entfernbaren Brillengläsern seien Konfigurationen mit snap-fit-Linsen, die typischerweise in den Brillenrahmen von der Frontseite (der dem Gesicht abgewandten Seite des Brillenrahmens) her durch Einschnappen eingesetzt werden. Das erfordert Feinfühligkeit und einen dosierten Kraftaufwand, der eine gewisse motorische Fertigkeit erfordert, die ebenfalls nicht jedem Brillenträger zugesprochen werden kann.

Als nachteilig wird am Stand der Technik kritisiert, dass der Brillenrahmen z. B. in seiner Dicke unterschiedlich dimensioniert werden muss, um ihn an möglicherweise unterschiedliche Brillenglasdicken anzupassen. Folglich kann das Brillengestell, falls sich die nötige Brillenstärke für den Brillenträger und damit die Brillenglasdicke ändert, für die neuen Brillengläser nicht mehr geeignet sein.

Der in der vorgenannten WO 2015/031511 A1 beschriebene Stand der Technik und auch die in dieser Schrift offenbarte neue Brillenkonfiguration weisen daraufhin, dass es hier darum geht, ein Gestell länger nutzen zu können, als die Brillengläser für den Brillenträger optimal sind. Das heißt, sollte er neue Brillengläser benötigen, soll er das Brillengestell mit ausgetauschten Brillengläsern weiter nutzen können. Es geht nicht darum, womöglich täglich die Brillengläser aus dem Brillengestell zu entfernen und in ein anderes Brillengestell einzusetzen.

In der vorgenannten WO 2015/031511 A1 wird nun vorgeschlagen, in den Rand des Brillenglases eine keilförmige Leiste einzuarbeiten oder an dieser auszubilden, die unabhängig von der dimensionierten Dicke des Brillenglases in einem gleichen Abstand von dessen Frontseite der Glasoberfläche angeordnet ist. Damit haben Brillengläser unterschiedlicher Dicke, die mittels der Leiste in eine in dem Brillenrahmen ausgebildeten Nut eingefügt werden, stets einen gleichen Abstand zur Frontseite des Brillenrahmens. Bevorzugt ist an der Leiste eine greifbare Lasche ausgebildet, die beim Einsetzen des Brillenglases in den Brillenrahmen verhindern soll, dass die keilförmige Leiste über die Nut hinaus gedrückt wird. Um die Brillengläser einzusetzen, werden sie mit dosierter Kraft in den Brillenrahmen gedrückt. Entsprechend werden sie durch dosierte Krafteinwirkung aus der entgegengesetzten Richtung wieder aus dem Brillengestell entfernt.

Die in der vorgenannten WO 2015/031511 A1 offenbarte Brillenkonfiguration erlaubt das Entfernen der Brillengläser aus einem Brillenrahmen und Wiedereinsetzen in einen gleich dimensionierten anderen Brillenrahmen oder einen in seiner Dicke unterschiedlichen Brillenrahmen, dessen Brillenglasöffnung ansonsten gleich dimensioniert ist. Dazu muss das Material der Fassung jedoch sehr elastisch sein bzw. durch Erwärmung vor der Demontage bzw. Montage elastisch gemacht werden. Die bei der Montage und Demontage erforderliche Krafteinwirkung beansprucht zumindest die Paarungsbaugruppe (keilförmige Leiste und Nut) immer wieder mechanisch, weshalb eine solche Montage und Demontage nicht für eine tägliche Anwendung geeignet sind.

Aus der US 4 971 431 A ist eine Brillenkonfiguration bekannt, bei der die Brillengläser jeweils in einem Metallband gefasst sind. Gleich konventionellen Brillen weist die hier offenbarte Brille einen Brillenrahmen mit zwei Brillenglasöffnungen und einer Brücke sowie zwei Brillenbügel auf. Die Brille kann aus unterschiedlichem Material sein, wie Metall oder Kunststoff. Die äußere Form des Brillenrahmens kann ebenso verschiedene modische Formen aufweisen. Wichtig ist die Form der Umfangsflächen der Brillenglasöffnungen im Brillenrahmen sowie die äußere Form der hierzu korrespondierenden gefassten Brillengläser.

Im Unterschied zu Brillenkonfigurationen, wie sie zur damaligen Zeit zum Stand der Technik gehörten, sind die Brillengläser hier in einem Metallband gefasst, das eine nach außen hin an die innere Umfangsfläche der Brillenglasöffnungen angepasste Form aufweist. In allen dargebotenen Ausführungsbeispielen ist die innere Umfangsfläche der Brillenglasöffnungen als eine Nut ausgebildet, in die das Metallband eingreift. Die dazu nach außen ragende, insbesondere konvexe Oberfläche des Metallbandes kann sowohl durch die Querschnittsform des Metallbandes selbst als auch durch die Querschnittsform des Randes des Brillenglases gegeben sein, die auch mit dem Metallband beibehalten wird. In den Umfangsflächen der Brillenglasöffnung sind in einem Bereich, der die Stabilität der Brille nicht beeinflusst, z. B. an der Brücke, Aussparungen vorhanden, in die jeweils der Verschluss des Metallbandes eingelegt wird. Der Verschluss des Metallbandes wird durch dessen abgelenkte Enden und eine diese verbindende Schraub- oder Nietverbindung gebildet. Ebenso wie in der vorgenannten WO 2015/031511 A1 werden die in dem Metallband gefassten und mit einer keilförmigen Leiste versehenen Brillengläser in den Brillenrahmen eingeschnappt, sofern das Material des Brillengestells elastisch ist. Im Falle, dass der Brillenrahmen aus Metall ist, ist das Brillengestell um die Brillenglasöffnungen z. B. durch Metallprofile gebildet, die nach dem Einsetzen des gefassten Brillenglases verschlossen werden.

Als weiterer relevanter Stand der Technik ist das Dokument KR20150127435 zu sehen.

Auch hier muss das Brillenglas unter Krafteinwirkung eingesetzt werden bzw. es bedarf eines Montageschrittes unter Nutzung eines Werkzeuges.

Es ist die Aufgabe der Erfindung, eine Brille zu finden, aus der auch ein fachunkundiger Brillenträger die Brillengläser aus dem Brillenrahmen auf einfache Weise wiederholt reversibel entnehmen kann und diese durch ein kraftfreies Fügen der Brillengläser in denselben oder einen artgleichen Brillenrahmen wieder einsetzen kann.

Diese Aufgabe wird für eine Brille, umfassend zwei jeweils in einem Metallband gefasste Brillengläser und ein Brillengestell mit zwei Brillenbügeln und einem Brillenrahmen, der eine Frontseite, eine Rückseite, eine Brücke und zwei durch innere Umfangsflächen begrenzte Brillenglasöffnungen aufweist, gelöst. In den Brillenglasöffnungen sind die in den Metallbändern gefassten Brillengläser angeordnet, wobei die Metallbänder jeweils eine äußere Umfangsfläche, die zu einer der inneren Umfangsflächen der Brillenglasöffnung korrespondiert, und eine innere Umfangsfläche, die zu einer genuteten Umfangsfläche eines der Brillengläser korrespondiert, aufweisen. Für eine solche Brille wird die Aufgabe dadurch gelöst, dass die inneren Umfangsflächen der Brillenglasöffnung und die äußeren Umfangsflächen der Metallbänder unstrukturiert sind, dass die Metallbänder jeweils zwei zueinander fluchtend angeordnete Enden aufweisen, an denen jeweils ein Bauteil stoffschlüssig angebracht ist, und die Bauteile miteinander verbunden ein Positionierstück bilden, wobei die Positionierstücke im Brillenrahmen jeweils in einer teilweise zum Positionierstück korrespondierenden Aussparung an einer der Rückseite zugewandten Randfläche der Aussparung anliegend angeordnet sind. Damit sind die Brillengläser in dem Brillenrahmen definiert positioniert. Jeweils den Positionierstücken gegenüberliegend ist an dem Brillenrahmen jeweils eine Schnappverbindung zwischen dem Metallband und dem Brillenrahmen vorhanden, womit die Brillengläser in dem Brillenrahmen fixiert sind.

Vorteilhaft sind die inneren Umfangsflächen der Brillenglasöffnungen zu der einem Brillenträger abgewandten Frontseite hin in das Innere der Brillenglasöffnung geneigte Flächen.

Es ist ferner von Vorteil, wenn die Positionierstücke jeweils mit einer Spielpassung formschlüssig in tangentialer Richtung zu einer der inneren Umfangsflächen der Brillenglasöffnungen in dem Brillenrahmen eingepasst sind.

Vorzugsweise weisen die Positionierstücke ebene Formflächen auf, die tangential zur äußeren Umfangsfläche des Metallbandes angeordnet sind.

Es ist vorteilhaft, wenn die Positionierstücke Formflächen aufweisen, die parallel zur äußeren Umfangsfläche des Metallbandes angeordnet sind.

Bevorzugt sind die jeweils ein Positionierstück bildenden Bauteile aus einem gleichen Material wie das Metallband.

Es ist von Vorteil, wenn die Aussparungen jeweils einem der Brillenbügel und die Schnappverbindungen jeweils der Brücke zugewandt angeordnet sind.

Vorzugsweise ist das Material des Brillenrahmens Kunststoff und die Aussparungen sind in einem Formkörper aus einem Metall ausgebildet, der in dem Brillenrahmen eingesetzt ist.

Vorteilhaft ist die erfindungsgemäße Brille Bestandteil eines Brillensets. Das Brillenset umfasst eine Brille gemäß einem der Ansprüche 1 bis 8 und wenigstens ein weiteres Brillengestell einer Brille gemäß einem der Ansprüche 1 bis 8.

Ein Brillenset umfasst auch wenigstens zwei Brillengestelle einer Brille gemäß einem der Ansprüche 1 bis 8 und zwei in einem Metallband gefasste Brillengläser einer Brille gemäß einem der Ansprüche 1 bis 8.

Die Erfindung wird nachfolgend unter Bezugnahme auf Zeichnungen näher erläutert. Hierzu zeigen:
- Fig. 1: eine Explosionsdarstellung einer erfindungsgemäßen Brille,
- Fig. 2a-2d: einen Ausschnitt des Metallbandes mit einer ersten Ausführung eines Positionierstückes, einen Ausschnitt der montierten Brille mit diesem Positionierstück und jeweils ein Schnittbild der Brille mit diesem Positionierstück während der Montage und im gefügten Zustand und
- Fig. 3a-3d: einen Ausschnitt des Metallbandes mit einer zweiten Ausführung eines Positionierstückes, einen Ausschnitt der montierten Brille mit diesem Positionierstück und jeweils ein Schnittbild der Brille mit diesem Positionierstück während der Montage und im gefügten Zustand.

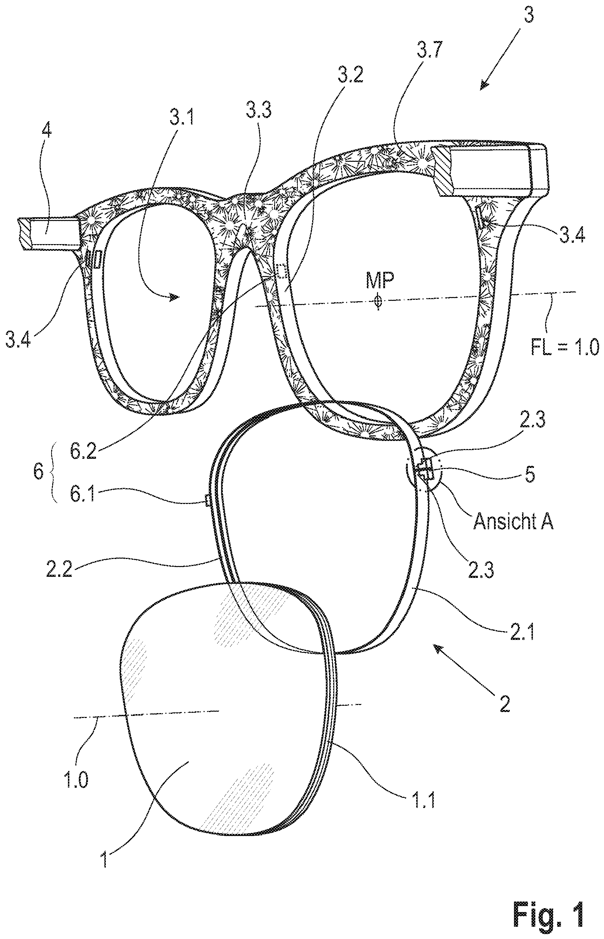

Eine erfindungsgemäße Brille, dargestellt in **Fig. 1**, umfasst, gleich aus dem Stand der Technik bekannter Brillen, grundsätzlich zwei jeweils in einem Metallband 2 gefasste Brillengläser 1 und ein Brillengestell mit zwei Brillenbügeln 4 und einem Brillenrahmen 3 mit einer Frontseite 3.6 und einer einem Brillenträger zugewandten Rückseite 3.7. Der Brillenrahmen 3 weist mittig eine Brücke 3.3 und zwei hierzu symmetrische Brillenglasöffnungen 3.1 zur Aufnahme der gefassten Brillengläser 1 auf. Die Brillenglasöffnungen 3.1 werden durch innere Umfangsflächen der Brillenglasöffnung 3.2 begrenzt und sind in Form und Dimension auf die gefassten Brillengläser 1 abgestimmt.

Damit durch die um die Brillengläser 1 gelegten Metallbänder 2 keine Spannungen in die Brillengläser 1 eingebracht werden, sind diese nicht kraftschlüssig um die Brillengläser 1 gespannt, sondern sind mit ihnen formschlüssig verbunden. Das heißt die Umfangsflächen der Brillengläser 1.1 korrespondieren nicht nur zu den inneren Umfangsflächen der Metallbänder 2.2, sondern sie sind formschlüssig mit diesen verbunden.

Konkret greift das Metallband 2, wie im Stand der Technik bewährt und gängig, mit einem an seiner inneren Umfangsfläche 2.2 ausgebildeten Bund in die genutete Umfangsfläche des Brillenglases 1.1 ein und bildet so einen Formschluss in axialer Richtung der optischen Achse des Brillenglases 1.0, die bezogen auf die Oberfläche des Brillenglases 1 mit einem Flächenlot FL durch den Mittelpunkt des Brillenglases MP zusammenfällt.

Die jeweils äußeren Umfangsflächen der Metallbänder 2.1 korrespondieren jeweils zu den inneren Umfangsflächen der Brillenglasöffnung 3.2 und sind unstrukturiert.

Vorteilhaft sind die inneren Umfangsflächen der Brillenglasöffnungen 3.2 zu der einem Brillenträger abgewandten Frontseite des Brillenrahmens 3.6 hin in das Innere der Brillenglasöffnung 3.1 geneigte Flächen. Entsprechend sind die äußeren Umfangsflächen der Metallbänder 2.1 in gleicher Richtung und gleichem Neigungswinkel geneigte Flächen.

Alternativ können die inneren Umfangsflächen der Brillenglasöffnungen 3.2 eine zylindrische Form aufweisen und an eine der Frontseite des Brillenrahmens 3.6 zugewandte umlaufende Kante grenzen.

Die Enden 2.3 der um die Brillengläser 1 jeweils gelegten Metallbänder 2 sind zueinander fluchtend angeordnet. An den Enden 2.3 ist jeweils eines von zwei Bauteilen 5.1 stoffschlüssig angebracht, die gemeinsam, miteinander verbunden ein Positionierstück 5 bilden.

Die Positionierstücke 5 sind im Brillenrahmen 3 jeweils in einer teilweise zu dem Positionierstück 5 korrespondierenden Aussparung 3.4 an einer der Rückseite 3.7 zugewandten Randfläche der Aussparung 3.4.1 anliegend angeordnet.

Die Aussparungen 3.4 sind in Richtung der Frontseite 3.6 so groß ausgebildet, dass zur Montage der gefassten Brillengläser 1 die Positionierstücke 5 jeweils einführbar und an die Randfläche der Aussparung 3.4.1 anlegbar sind, wobei das Einfügen im Wesentlichen durch ein Schwenken erfolgt. Während des Einfügens schmiegt sich die äußere Umfangsfläche des Metallbandes 2.1 an die innere Umfangsfläche der Brillenglasöffnung 3.2.

Im vollständig eingeschwenkten Zustand liegt dann das gefasste Brillenglas 1 in axialer Richtung der optischen Achse des Brillenglases 1.0 in Richtung der Frontseite 3.6 und in radialer Richtung an der inneren Umfangsfläche der Brillenglasöffnung 3.2 an, sofern die innere Umfangsfläche 3.2 zu der einem Brillenträger abgewandten Frontseite 3.6 hin in das Innere der Brillenglasöffnung 3.1 geneigt ist.

Ist die innere Umfangsfläche 3.2 eine zylindrische Fläche (mit einer Querschnittsform gleich der Umfangsform des Brillenglases 1, die an eine umlaufende Kante grenzt, dann liegt das gefasste Brillenglas 1 in axialer Richtung der optischen Achse des Brillenglases 1.0 in Richtung der Frontseite 3.6 an der Kante und in radialer Richtung an der inneren Umfangsfläche der Brillenglasöffnung 3.2 an. In beiden Fällen liegt das gefasste Brillenglas 1 in Richtung der Rückseite 3.7 an der Randfläche der Aussparung 3.4.1 an. Das gefasste Brillenglas 1 ist nunmehr zur Brillenfassung positioniert.

Weicht die Umfangsform des Brillenglases 1 von einer Kreisform ab, ist das eingepasste Brillenglas 1 nicht nur radial formschlüssig gehalten, sondern es ist auch in seiner Winkellage definiert eingepasst. Sowohl die Maßkette zwischen der inneren Umfangsfläche der Brillenglasöffnung 3.2 und der Randfläche der Aussparungen 3.4.1 als auch der Formschluss weisen ein hinreichendes Spiel auf, um Zwang auszuschließen.

In dieser Lage im Brillenrahmen 3 haben die gefassten Brillengläser 1 nur noch die Freiheit wieder auszuschwenken. Um ein ungewolltes Ausschwenken der Positionierstücke 5 aus den Aussparungen 3.4 zu verhindern, ist zu den Positionierstücken 5 gegenüberliegend an dem Brillenrahmen 3 jeweils eine Schnappverbindung 6 zwischen dem Metallband 2 und dem Brillenrahmen 3 vorhanden. Bevorzugt wird diese Schnappverbindung 6 durch ein am Metallband 2 stoffschlüssig angebrachtes Schnappelement 6.1, wie ein Zylinderstück oder eine Kugel, und ein hierzu korrespondierendes, an dem Brillenrahmen 3 angebrachtes oder hier ausgebildetes Gegenstück 6.2, das in den Figuren nicht näher ausgeführt ist, gebildet. Durch einen nur leichten Druck auf die Brillengläser 1 schnappt das Schnappelement 6.1 ein bzw. aus. Der hierzu erforderliche Kraftaufwand ist marginal im Vergleich zu dem erforderlichen Kraftaufwand bei der Montage eines Brillenglases 1 in den Brillenrahmen 3 gemäß dem Stand der Technik. Entsprechend geringer ist die Gefahr der Beschädigung der Brillengläser 1 oder des Brillenrahmens 3. Insbesondere das Positionierstück 5 sorgt dafür, dass das Brillenglas 1 reversibel in derselben Relativlage in dem Brillenrahmen 3 oder auch in einem anderen Brillenrahmen, der die hierfür relevanten Formen und Dimensionen aufweist, einsetzbar ist.

Es ist von Vorteil, wenn die Positionierstücke 5 jeweils mit einer Spielpassung formschlüssig in tangentialer Richtung zu einer der inneren Umfangsflächen der Brillenglasöffnungen 3.2 in dem Brillenrahmen 3 eingepasst sind.

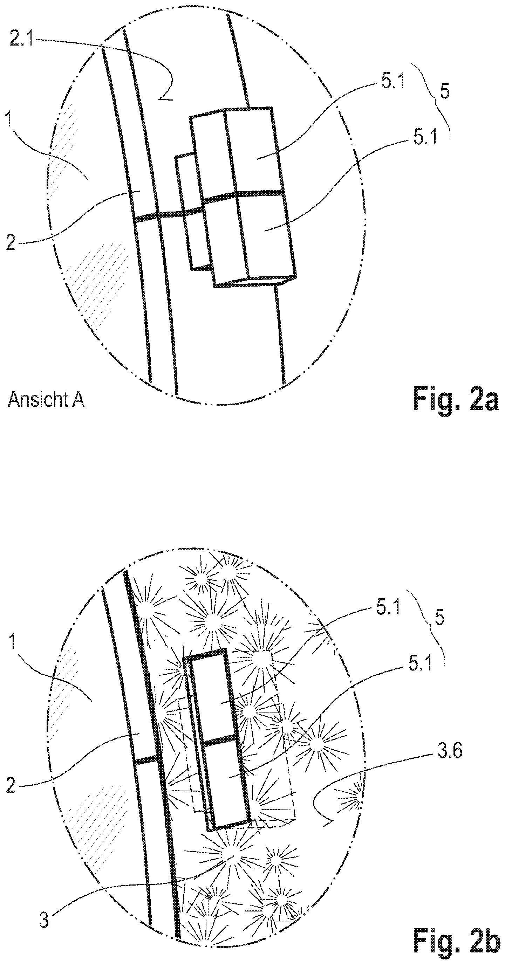

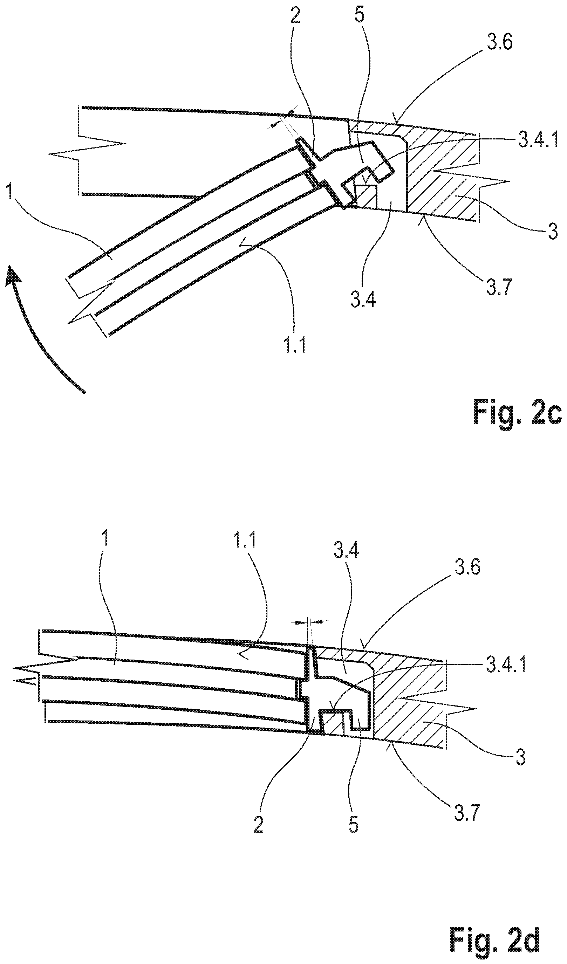

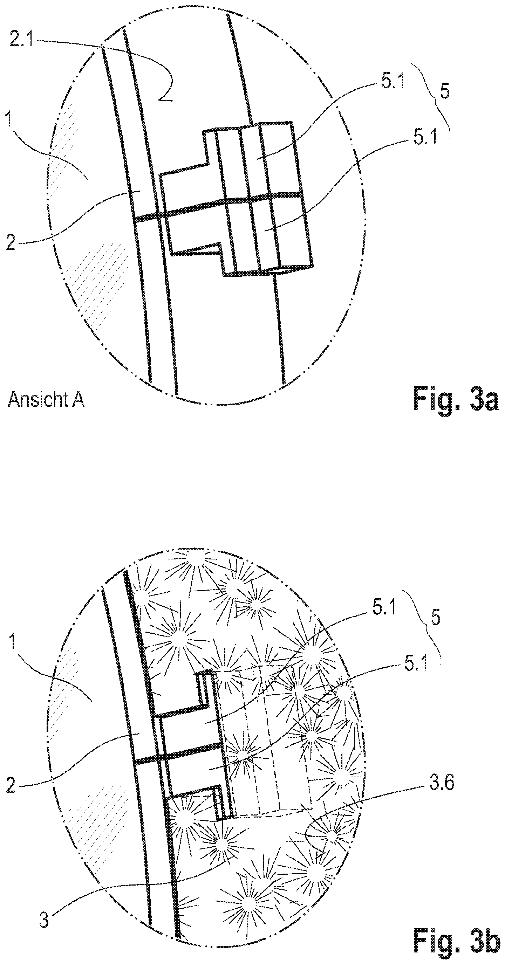

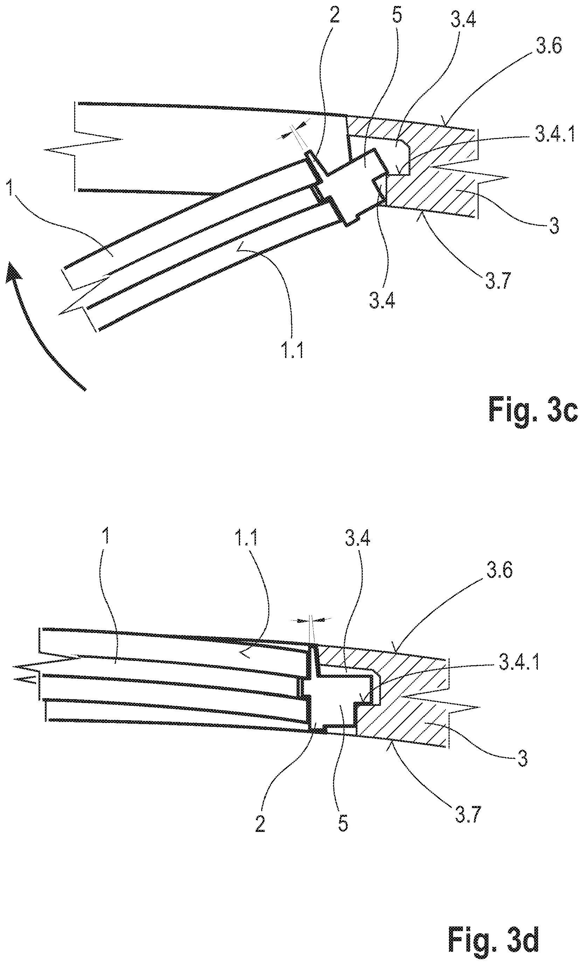

Beispielsweise können, wie in **Fig. 2a-2d** und 3a-3d dargestellt, die Passtücke 5 ebene Formflächen aufweisen, die tangential zur äußeren Umfangsfläche des Metallbandes 2.1 angeordnet sind.

Die beispielhaft gezeigten Positionierstücke 5 unterscheiden sich durch die Lage einer Anschlagfläche im Brillenrahmen 3, die entweder unterhalb oder oberhalb der Aussparung 3.4 ausgebildet ist.

Ebenfalls vorteilhaft günstig ist ein Formschluss, nicht in den Figuren dargestellt, wenn die Positionierstücke 5 Formflächen aufweisen, die parallel zur äußeren Umfangsfläche des Metallbandes 2.1 angeordnet sind. Das heißt, sie haben über ihre Länge eine gleiche Umfangsform wie das Brillenglas 1.

Die Positionierstücke 5 sind bevorzugt aus dem gleichen Material wie das Metallband 2, können aber auch aus einem anderen Material sein, das langfristig stabil mit dem Metallband 2 stoffschlüssig verbindbar ist.

Grundsätzlich können das Positionierstück 5 und das Schnappelement 6.1 an beliebiger Stelle relativ zum Brillenglas 1 bzw. relativ zum Brillenrahmen 3 angebracht sein, sofern sie wenigstens annähernd gegenüberliegend angebracht sind. Es ist jedoch von Vorteil, wenn die Aussparungen 3.4 jeweils einem der Brillenbügel 4 und die Schnappverbindungen 6 jeweils der Brücke 3.3 zugewandt angeordnet sind. Im Bereich der Brillenbügel 4 ist das Brillengestell in der Regel massiver ausgeführt, was bei einer im Wesentlichen gleichen Dicke des Brillenrahmens 3 über seine Ausdehnung bedeutet, dass der Brillenrahmen 3 hier großflächiger ist und daher besser den für die Aussparung 3.4 erforderlichen Bauraum bietet.

Als Material für den Brillenrahmen 3 kann grundsätzlich jedes für Brillengestelle geeignete Material verwendet werden. Bevorzugt kommt jedoch ein wenigstens geringfügig elastischer Kunststoff zum Einsatz. Die durch den Formschluss zum einen und die z. B. geneigte Umfangsfläche zum anderen geschaffene Überbestimmtheit kann hier bei entgegengesetzten Toleranzen durch die Elastizität ausgeglichen werden. Darüber hinaus lassen sich die Aussparungen 3.4 durch den Einsatz von Kernen gut im Spritzgussverfahren herstellen.

Die Herstellung des Brillenrahmens 3 wird billig, was der Idee zuträglich ist, eine Vielzahl von Brillengestellen in einem Set zusammen mit nur einem Paar von gefassten Brillengläsern 1 im Handel anzubieten.

Anstelle, dass die Aussparungen 3.4 direkt in einem Brillenrahmen 3 aus Kunststoff ausgebildet sind, könnte auch eine zylinderförmige Ausnehmung in dem z. B. als Spritzgussteil hergestellten Brillenrahmen 3 vorhanden sein, in die dann ein zylinderförmiger Körper z. B. aus Metall eingesetzt ist, in dem die Aussparung 3.4 z. B. ausgefräst wurde.

Die Brille zeichnet sich insbesondere dadurch aus, dass die Brillengläser 1 kraftfrei in die Brillenglasöffnungen 3.1 eingefügt werden. Lediglich zur Herstellung oder zum Lösen der Schnappverbindung 6 bedarf es einer Kraft, die aber vergleichsweise marginal ist. Selbst diese kleine Kraft muss nicht auf das Brillenglas 1 wirken, sondern kann auch an dem Schnappelement 6.1 angreifen.

Indem die Positionierstücke 5 vorteilhaft jeweils mit einer Spielpassung formschlüssig in tangentialer Richtung zu einer der inneren Umfangsflächen der Brillenglasöffnungen 3.2 in dem Brillenrahmen 3 eingepasst sind, ist gewährleistet, dass die Brillengläser 1 wiederholbar im Brillengestell immer in einer gleichen Winkellage um die optische Achse der Brillengläser 1.0 eingepasst werden, selbst wenn das Brillenglas 1 rund ist. Damit bedarf es keiner Einjustierung durch einen Fachmann, was ansonsten z. B. bei Brillengläsern 1, die einen Zylinderfehler ausgleichen sollen, erforderlich ist.

Der Brillenträger kann auch ohne besondere motorische Fähigkeiten und ohne Hilfsmittel die Brillengläser 1 selbst zwischen verschiedenen Brillengestellen schnell austauschen. Das erlaubt ihm, ohne dass er sich mehrere Brillen kaufen muss, stets passend zu seinem Outfit die Brille als passendes Zubehör zu tragen.

### Bezugszeichenliste

- 1: Brillenglas
- 1.0: optische Achse des Brillenglases
- 1.1: Umfangsfläche des Brillenglases
- 2: Metallband
- 2.1: äußere Umfangsfläche des Metallbandes
- 2.2: innere Umfangsfläche des Metallbandes
- 2.3: Ende des Metallbandes
- 3: Brillenrahmen
- 3.1: Brillenglasöffnung
- 3.2: innere Umfangsfläche der Brillenglasöffnung
- 3.3: Brücke
- 3.4: Aussparung
- 3.4.1: Randfläche der Aussparung
- 3.6: Frontseite des Brillenrahmens
- 3.7: Rückseite des Brillenrahmens
- 4: Brillenbügel
- 5: Positionierstück
- 5.1: Bauteil
- 6: Schnappverbindung
- 6.1: Schnappelement
- 6.2: Gegenstück zum Schnappelement

- MP: Mittelpunkt des Brillenglases
- FL: Flächenlot

## Patentansprüche

1. Brille, umfassend zwei jeweils in einem Metallband (2) gefasste Brillengläser (1) und ein Brillengestell mit zwei Brillenbügeln (4) und einem Brillenrahmen (3), der eine Frontseite (3.6), eine Rückseite (3.7), eine Brücke (3.3) und zwei durch innere Umfangsflächen (3.2) begrenzte Brillenglasöffnungen (3.1) aufweist, in denen die in den Metallbändern (2) gefassten Brillengläser (1) angeordnet sind, wobei die Metallbänder (2) jeweils eine äußere Umfangsfläche (2.1), die zu einer der inneren Umfangsflächen der Brillenglasöffnung (3.2) korrespondiert, und eine innere Umfangsfläche (2.2), die zu einer genuteten Umfangsfläche (1.1) eines der Brillengläser (1) korrespondiert, aufweisen, **dadurch gekennzeichnet,**
**dass** die inneren Umfangsflächen der Brillenglasöffnung (3.2) und die äußeren Umfangsflächen der Metallbänder (2.1) unstrukturiert sind,
**dass** die Metallbänder (2) jeweils zwei zueinander fluchtend angeordnete Enden (2.3) aufweisen, an denen jeweils ein Bauteil (5.1) stoffschlüssig angebracht ist, und die Bauteile (5.1) miteinander verbunden ein Positionierstück (5) bilden,
**dass** die Positionierstücke (5) im Brillenrahmen (3) jeweils in einer teilweise zum Positionierstück (5) korrespondierenden Aussparung (3.4) an einer der Rückseite (3.7) zugewandten Randfläche der Aussparung (3.4.1) anliegend angeordnet sind, womit die Brillengläser (1) in dem Brillenrahmen (3) positioniert sind,
und **dass** an dem Brillenrahmen (3), den Positionierstücken (5) jeweils gegenüberliegend, eine Schnappverbindung (6) zwischen dem Metallband (2) und dem Brillenrahmen (3) vorhanden ist, womit die Brillengläser (1) in dem Brillenrahmen (3) fixiert sind.

2. Brille nach Anspruch 1, **dadurch gekennzeichnet,**
**dass** die inneren Umfangsflächen der Brillenglasöffnungen (3.2) zu der einem Brillenträger abgewandten Frontseite (3.6) hin in das Innere der Brillenglasöffnung (3.1) geneigte Flächen sind.

3. Brille nach Anspruch 1 oder 2, **dadurch gekennzeichnet,**
**dass** die Positionierstücke (5) jeweils mit einer Spielpassung formschlüssig in tangentialer Richtung zu einer der inneren Umfangsflächen der Brillenglasöffnungen (3.2) in dem Brillenrahmen (3) eingepasst sind.

4. Brille nach Anspruch 3, **dadurch gekennzeichnet,**
**dass** die Positionierstücke (5) ebene Formflächen aufweisen, die tangential zur äußeren Umfangsfläche des Metallbandes (2.1) angeordnet sind.

5. Brille nach Anspruch 3, **dadurch gekennzeichnet,**
**dass** die Positionierstücke (5) Formflächen aufweisen, die parallel zur äußeren Umfangsfläche des Metallbandes (2.1) angeordnet sind.

6. Brille nach einem der vorhergehenden Ansprüche, **dadurch gekennzeichnet,**
**dass** die jeweils ein Positionierstück (5) bildenden Bauteile (5.1) aus einem gleichen Material sind wie das Metallband (2).

7. Brille nach einem der vorhergehenden Ansprüche, **dadurch gekennzeichnet,**
**dass** die Aussparungen (3.4) jeweils einem der Brillenbügel (4) und die Schnappverbindungen (6) jeweils der Brücke (3.3) zugewandt angeordnet sind.

8. Brille nach einem der vorhergehenden Ansprüche, **dadurch gekennzeichnet,**
**dass** das Material des Brillenrahmens (3) Kunststoff ist und die Aussparungen (3.4) in einem Formkörper aus einem Metall ausgebildet sind, der in dem Brillenrahmen (3) eingesetzt ist.

9. Brillenset mit einer Brille gemäß einem der vorhergehenden Ansprüche und wenigstens einem weiteren Brillengestell einer Brille gemäß einem der vorhergehenden Ansprüche.

10. Brillenset mit wenigstens zwei Brillengestellen einer Brille gemäß einem der Ansprüche 1 bis 8 und zwei in einem Metallband (2) gefassten Brillengläsern (1) einer Brille gemäß einem der Ansprüche 1 bis 8.

## Claims

1. Spectacles, comprising two spectacle lenses (1), each fitted in a metal strip (2), and a spectacle assembly with two spectacle arms (4) and a spectacle frame (3) which has a front side (3.6), a rear side (3.7), a bridge (3.3) and two spectacle lens openings (3.1) bounded by inner peripheral surfaces (3.2), which spectacle lens openings (3.1) accommodate the spectacle lenses (1) fitted in the metal strips (2), wherein the metal strips (2) each have an outer peripheral surface (2. 1) corresponding to one of the inner peripheral surfaces of the spectacle lens opening (3.2) and an inner peripheral surface (2.2) corresponding to a grooved peripheral surface (1.1) of one of the spectacle lenses (1), **characterized in that** the inner peripheral surfaces of the spectacle lens opening (3.2) and the outer peripheral surfaces of the metal strips (2.1) are unstructured,
**in that** the metal strips (2) each have two ends (2.3) which are arranged in alignment with one another and to each of which a component (5.1) is cohesively attached, and the components (5.1), connected to one another, form a positioning piece (5),
**in that** the positioning pieces (5) in the spectacle frame (3) are each located in a recess (3.4), corresponding in part to the positioning piece (5), and in contact with an edge surface of the recess (3.4.1) facing the rear side (3.7), thereby positioning the spectacle lenses (1) in the spectacle frame (3),
and **in that** on the spectacle frame (3), opposite the positioning pieces (5) in each case, there is a snap connection (6) between the metal strip (2) and the spectacle frame (3), thereby fixing the spectacle lenses (1) in the spectacle frame (3).

2. Spectacles according to claim 1, **characterized in that**
the inner peripheral surfaces of the spectacle lens openings (3.2) are surfaces inclined towards the front side (3.6) facing away from a spectacle wearer into the interior of the spectacle lens opening (3.1).

3. The device according to claim 1 or 2, **characterized in that**
the positioning pieces (5) are each fitted in the spectacle frame (3) with a clearance fit in a form-locking manner in a tangential direction to one of the inner peripheral surfaces of the spectacle lens openings (3.2).

4. Spectacles according to claim 3, **characterized in that**
the positioning pieces (5) have flat shaped surfaces which are arranged tangentially to the outer peripheral surface of the metal strip (2.1).

5. Spectacles according to claim 3, **characterized in that**
the positioning pieces (5) have shaped surfaces which are arranged parallel to the outer peripheral surface of the metal strip (2.1).

6. Spectacles according to any one of the preceding claims, **characterized in that**
the components (5.1) each forming a positioning piece (5) are made of the same material as the metal strip (2).

7. Spectacles according to any one of the preceding claims, **characterized in**
**that** the recesses (3.4) are each arranged facing one of the spectacle arms (4) and the snap connections (6) are each arranged facing the bridge (3.3).

8. Spectacles according to any one of the preceding claims, **characterized in that** the material of the spectacle frame (3) is plastic and the recesses (3.4) are formed in a shaped body of a metal which is inserted in the spectacle frame (3).

9. Spectacle set comprising a pair of spectacles according to any one of the preceding claims and at least one further spectacle assembly for spectacles according to any one of the preceding claims.

10. Spectacle set comprising at least two spectacle assemblies for spectacles according to any one of claims 1 to 8 and two spectacle lenses (1), fitted in a metal strip (2), for spectacles according to any one of claims 1 to 8.

## Revendications

1. Lunettes, comprenant deux verres de lunettes (1), montés chacun dans une bande métallique (2), et un assemblage de lunettes avec deux branches de lunettes (4) et une monture de lunettes (3), qui présente une face avant (3.6), une face arrière (3.7), un pont (3.3) et deux ouvertures de verre de lunettes (3.1) délimitées par des surfaces périphériques intérieures (3.2), dans lesquelles sont disposés les verres de lunettes (1) montés dans les bandes métalliques (2), les bandes métalliques (2) présentant chacune une surface périphérique extérieure (2. 1) qui correspond à l'une des surfaces périphériques intérieures de l'ouverture de verre de lunettes (3.2) et une surface périphérique intérieure (2.2) qui correspond à une surface périphérique rainurée (1.1) de l'un des verres de lunettes (1), **caractérisées en ce que** les surfaces périphériques intérieures de l'ouverture de verre de lunettes (3.2) et les surfaces périphériques extérieures des bandes métalliques (2.1) ne sont pas structurées,
**en ce que** les bandes métalliques (2) présentent chacune deux extrémités (2.3) disposées en alignement l'une par rapport à l'autre, sur chacune desquelles est monté un composant (5.1) par adhérence, et les composants (5.1), reliés entre eux, forment une pièce de positionnement (5),
**en ce que** les pièces de positionnement (5) sont montées dans la monture de lunettes (3), chacune dans un évidement (3.1) correspondant partiellement à la pièce de positionnement (5), en appui sur une surface de bord de l'évidement (3.4.1) tournée vers la face arrière (3.7), ce qui permet de positionner les verres de lunettes (1) dans la monture de lunettes (3),
et **en ce que**, sur la monture de lunettes (3), en face des pièces de positionnement (5), il y a une liaison à encliquetage (6), entre la bande métallique (2) et la monture de lunettes (3), au moyen de laquelle les verres de lunettes (1) sont fixés dans la monture de lunettes (3).

2. Lunettes selon la revendication 1, **caractérisées en ce que** les surfaces périphériques intérieures des ouvertures de verre de lunettes (3.2) sont des surfaces inclinées vers l'intérieur de l'ouverture de verre de lunettes (3.1) en direction de la face avant (3.6) opposée à un porteur de lunettes.

3. Lunettes selon la revendication 1 ou 2, **caractérisées en ce que** les pièces de positionnement (5) sont montées chacune, dans la monture de lunettes (3), avec un ajustement avec jeu par à engagement positif dans une direction tangentielle à l'une des surfaces périphériques intérieures des ouvertures de verre de lunettes (3.2).

4. Lunettes selon la revendication 3, **caractérisées en ce que** les pièces de positionnement (5) présentent des surfaces de forme planes qui sont disposées tangentiellement à la surface périphérique extérieure de la bande métallique (2.1).

5. Lunettes selon la revendication 3, **caractérisées en ce que** les pièces de positionnement (5) présentent des surfaces de forme qui sont disposées parallèlement à la surface périphérique extérieure de la bande métallique (2.1).

6. Dispositif selon l'une quelconque des revendications précédentes, **caractérisé en ce que**
les composants (5.1) formant respectivement une pièce de positionnement (5) sont réalisés dans un même matériau que la bande métallique (2).

7. Lunettes selon l'une quelconque des revendications précédentes,
**caractérisées en ce que** les évidements (3.4) sont disposés chacun en face de l'une des branches de lunettes (4) et les liaisons par encliquetage (6) sont disposées chacune en face du pont (3.3).

8. Lunettes selon l'une quelconque des revendications précédentes, **caractérisées en ce que** le matériau de la monture de lunettes (3) est du plastique et **en ce que** les évidements (3.4) sont formés dans un corps moulé en un métal qui est inséré dans la monture de lunettes (3).

9. Ensemble de lunettes comprenant des lunettes selon l'une quelconque des revendications précédentes et au moins un autre assemblage de lunettes pour des lunettes selon l'une quelconque des revendications précédentes.

10. Ensemble de lunettes comprenant au moins deux assemblages de lunettes pour des lunettes selon l'une quelconque des revendications 1 à 8 et deux verres de lunettes (1) pour des lunettes selon l'une quelconque des revendications 1 à 8, montés dans une bande métallique (2).
